# DEMANDE DE BREVET EUROPEEN

(11) **EP 1 630 469 A2**
(43) Date de publication de la demande: **01.03.2006**
(21) Numéro de dépôt: 05291760.6
(22) Date de dépôt: 19.08.2005
(51) Int. Cl.: F16N 13/20

(54) **Système de pompage d'huile de lubrification**

(30) Priorité: 24.08.2004 FR 0409066
(71) Demandeur: FILTRAUTO, 78286 Guyancourt Cedex (FR)
(72) Inventeur: Lepaule, Franck, 50450 Hambye (FR)
(74) Mandataire: Garel, Régis

(57) **Abrégé**

Système de pompage d'huile de lubrification, notamment pour moteur à combustion interne, comprenant une pompe (2) comportant au moins des premier et deuxième engrenages (9,10) et un dispositif d'entraînement (3) apte à entraîner en rotation le premier engrenage (9) de la pompe (2) à une vitesse de rotation (V1) proportionnelle au régime du moteur selon un premier rapport de vitesse constant. Le dispositif d'entraînement (3) est en outre apte à entraîner en rotation le deuxième engrenage (10) de la pompe (2) à une vitesse de rotation (V2) proportionnelle au régime du moteur selon un deuxième rapport de vitesse, et le dispositif d'entraînement (3) comprend des moyens sélectifs (8) pour entraîner la pompe (2) par le premier engrenage (9) ou par le deuxième engrenage (10) en fonction d'au moins un paramètre moteur prédéterminé.

## Description

La présente invention se rapporte aux systèmes de pompage d'huile de lubrification, notamment pour moteurs à combustion interne.

Plus particulièrement, l'invention concerne, parmi ces systèmes de pompage d'huile de lubrification, ceux qui comprennent :
- une pompe comportant au moins des premier et deuxième engrenages adaptés pour tourner dans un corps de pompe, et
- un dispositif d'entraînement apte à entraîner en rotation le premier engrenage de la pompe à une vitesse de rotation proportionnelle à la vitesse de rotation du moteur selon un premier rapport de vitesse constant.

Dans les systèmes de pompage d'huile de lubrification connus, le dispositif d'entraînement est généralement formé par une chaîne, une courroie ou au moins un engrenage qui relie mécaniquement le premier engrenage de la pompe à un élément tournant du moteur. Cet élément tournant du moteur peut être formé par le vilebrequin qui est donc entraîné en rotation en fonction du régime moteur. En conséquence, le rapport entre la vitesse de rotation du premier engrenage de la pompe et le vilebrequin est constant quelque soit le régime moteur.

Ces dispositifs d'entraînement connus présentent donc un inconvénient dans la mesure où le besoin en débit d'huile de lubrification du moteur n'est pas proportionnel au régime du moteur. Ces dispositifs d'entraînement ne permettant donc pas d'adapter le débit d'huile à la demande du moteur, le surplus d'huile de lubrification est alors dévié depuis le côté aval de la pompe vers son côté amont. En conséquence, une fraction de l'énergie motrice fournie à la pompe pour aspirer l'huile de lubrification et pour monter en pression le circuit d'huile est directement consommée pour recycler le surplus d'huile depuis le côté aval de la pompe vers son côté amont.

Des solutions ont déjà été mises en oeuvre pour pallier les inconvénients cités ci-dessus.

Une première solution consiste à entraîner la pompe ou plus exactement son premier engrenage par un système de poulie/courroie. Dans ce cas, les flasques des poulies sont montés mobiles l'une par rapport à l'autre, et sont actionnés par exemple par un vérin hydraulique de manière à faire varier le rapport de vitesse entre l'élément tournant du moteur, formé par exemple par le vilebrequin, et le premier engrenage de la pompe.

Néanmoins, ce dispositif d'entraînement formé par un système de poulie/courroie ne donne pas entière satisfaction dans la mesure où la courroie risque de subir une usure plus ou moins rapide par contact avec les poulies mobiles. Par ailleurs, les matériaux couramment utilisés pour la fabrication de ce type de courroie ne sont pas compatibles avec les huiles, les températures élevées, les additifs et les acides produits par la combustion du carburant et qui sont susceptibles d'être projetés sur les courroies.

Une autre solution connue pour pallier le problème de la gestion du débit d'huile en fonction du régime moteur consiste à utiliser plusieurs pompes agencées en parallèle. Dans ce cas, un système de distributeur permet de cumuler les débits fournis par les pompes ou d'isoler une pompe du reste du circuit de lubrification.

Ces systèmes de pompage d'huile de lubrification présentent donc l'inconvénient d'utiliser plusieurs pompes en faisant donc appel obligatoirement à un système de distribution permettant de cumuler ou non les débits fournis par les pompes.

La présente invention a notamment pour but de pallier les inconvénients mentionnés ci-dessus.

A cet effet, l'invention a pour objet un système de pompage d'huile de lubrification, notamment pour moteur à combustion interne, comprenant :
- une pompe comportant au moins des premier et deuxième engrenages adaptés pour tourner dans un corps de pompe, et
- un dispositif d'entraînement apte à entraîner en rotation le premier engrenage de la pompe à une vitesse de rotation proportionnelle à la vitesse de rotation du moteur selon un premier rapport de vitesse constant,

caractérisé en ce que le dispositif d'entraînement est en outre apte à entraîner en rotation le deuxième engrenage de la pompe à une vitesse de rotation proportionnelle à la vitesse de rotation du moteur selon un deuxième rapport de vitesse constant, et en ce que le dispositif d'entraînement comprend des moyens sélectifs pour entraîner la pompe par le premier engrenage ou par le deuxième engrenage de la pompe en fonction d'au moins un paramètre moteur prédéterminé.

Grâce à ces dispositions, le système de pompage d'huile de lubrification conforme à l'invention permet de fournir une pompe ayant un engrenage menant formé par l'un des premier et deuxième engrenages, l'engrenage mené de la pompe étant alors formé par l'autre des premier et deuxième engrenages en assurant donc au moins deux variations de débit différentes, et ce avec une seule et unique pompe.

Dans des modes de réalisation préférés de l'invention, on peut éventuellement avoir recours en outre à l'une et/ou à l'autre des dispositions suivantes :
- le dispositif d'entraînement est adapté pour relier les premier et deuxième engrenages de la pompe à un même élément tournant destiné à être entraîné en rotation par le moteur ;
- le dispositif d'entraînement comprend un étage de réduction présentant un arbre d'entrée destiné à être entraîné en rotation par l'élément tournant et des premier et deuxième arbres de sortie entraînés en rotation selon respectivement les premier et deuxième rapports de vitesse de rotation, et les moyens sélectifs sont aptes à relier, d'une part, le premier arbre de sortie avec le premier engrenage de la pompe, et d'autre part, le deuxième arbre de sortie avec le deuxième engrenage de ladite pompe ;
- le deuxième rapport de vitesse est inférieur au premier rapport de vitesse ;
- les moyens sélectifs comprennent :
   - une unité d'accouplement non permanent qui permet d'accoupler ou non le premier engrenage de la pompe avec le premier arbre de sortie de l'étage de réduction, et
   - une roue libre qui relie mécaniquement le deuxième engrenage de la pompe et le deuxième arbre de sortie de l'étage de réduction ;
- l'unité d'accouplement non permanent est commandé par des moyens de commande en fonction dudit au moins un paramètre moteur prédéterminé ;
- les moyens de commande comprennent un actionneur qui commande, en fonction dudit au moins un paramètre moteur prédéterminé, l'unité d'accouplement pour permettre l'accouplement ou non du premier arbre de sortie de l'étage réducteur avec le premier engrenage de la pompe ;
- le dispositif d'entraînement comprend en outre un étage de transmission de puissance qui est destiné à relier l'arbre d'entrée de l'étage de réduction à l'élément tournant du moteur ; et
- ledit au moins un paramètre moteur prédéterminé est compris parmi la pression d'huile en aval de la pompe, la température de l'huile, le débit d'huile en aval de la pompe, le régime moteur et la charge du moteur.

D'autres caractéristiques et avantages de l'invention apparaîtront au cours de la description suivante de l'un de ses modes de réalisation, donné à titre d'exemple non limitatif, en regard des dessins annexés sur lesquels :
- la figure 1 est une vue schématique du système de pompage d'huile de lubrification lorsque celui-ci est configuré en mode dit haut débit ;
- la figure 2 est une vue schématique du système de pompage d'huile de lubrification lorsque ce dernier est configurer en mode dit bas débit ;
- la figure 3 est une vue en coupe schématique illustrant le principe de fonctionnement d'une pompe dite à engrenages extérieurs comprenant des premier et deuxième engrenages ;
- la figure 4 est une vue schématique en coupe montrant un clapet de décharge monté en aval de la pompe à engrenages extérieurs ; et
- la figure 5 représente un graphe illustrant la gestion possible du débit d'huile de lubrification en fonction du régime moteur ou d'au moins un paramètre moteur prédéterminé.

Sur les différentes figures, les mêmes références désignent des éléments identiques ou similaires.

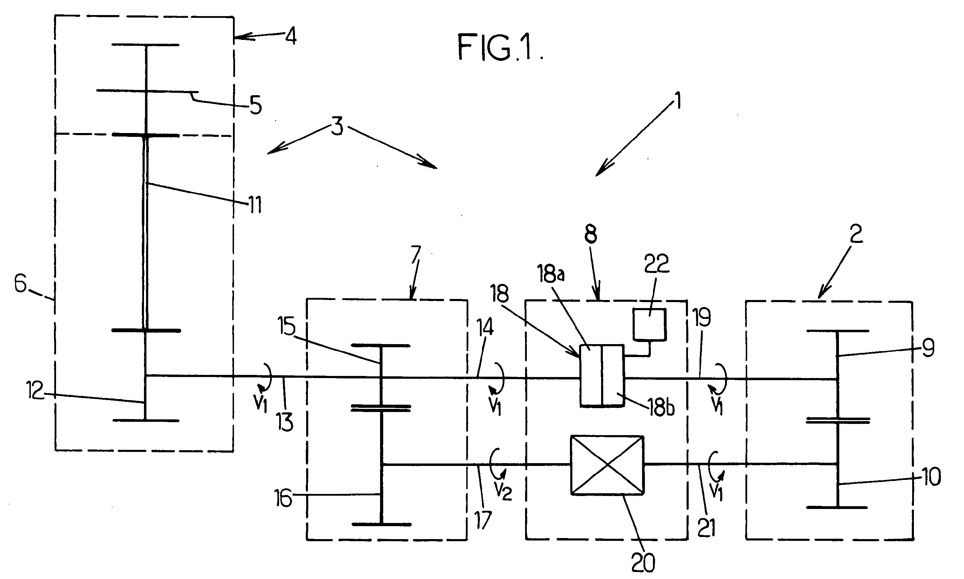

La figure 1 représente de manière schématique un système de pompage 1 destiné à alimenter en huile de lubrification un moteur, par exemple un moteur à combustion interne d'un véhicule automobile.

Ce système de pompage comprend principalement, d'une part, une pompe à engrenages extérieurs 2 destinée à fournir un débit d'huile de lubrification demandé par le moteur ou plus précisément par les organes mécaniques du moteur, et d'autre part, un dispositif d'entraînement 3 destiné à relier la pompe 2 à un étage d'approvisionnement en puissance 4 du moteur. Cet étage d'approvisionnement en puissance 4 peut par exemple être formé par le vilebrequin 5 du moteur ou un autre arbre qui est entraîné en rotation à une vitesse de rotation proportionnelle au régime du moteur.

Comme cela va être décrit plus en détail dans la suite de la description, le dispositif d'entraînement 3 comporte principalement un étage de transmission de puissance 6 couplé à l'étage d'approvisionnement en puissance 4, cet étage de transmission de puissance 6 étant suivi d'un étage de réduction 7, lui-même suivi de moyens sélectifs 8 reliés à la pompe 2.

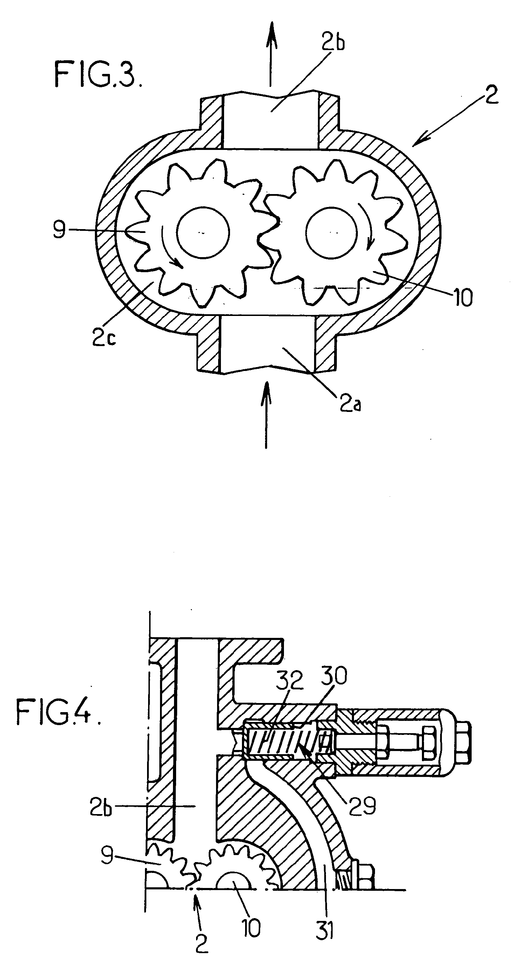

La figure 3 représente la pompe à engrenages extérieurs 2 connue en soi. Cette pompe à engrenages extérieurs 2 comprend un canal d'aspiration 2a de l'huile de lubrification qui est relié directement ou indirectement au carter d'huile du moteur à combustion interne, et un canal de refoulement 2b de l'huile de lubrification qui est destiné à refouler sous pression l'huile de lubrification aux divers organes mécaniques du moteur à combustion interne. Entre le canal d'aspiration 2a et le canal de refoulement 2b, la pompe 2 comprend également un corps de pompe 2c dans lequel sont disposés de manière pivotante un premier engrenage 9 et un deuxième engrenage 10. Ces premier et deuxième engrenages 9 et 10 sont destinés à pivoter dans des sens inverses en ayant des dents qui coopèrent de manière à créer une aspiration au niveau du canal d'aspiration 2a et un refoulement au niveau du canal de refoulement 2b.

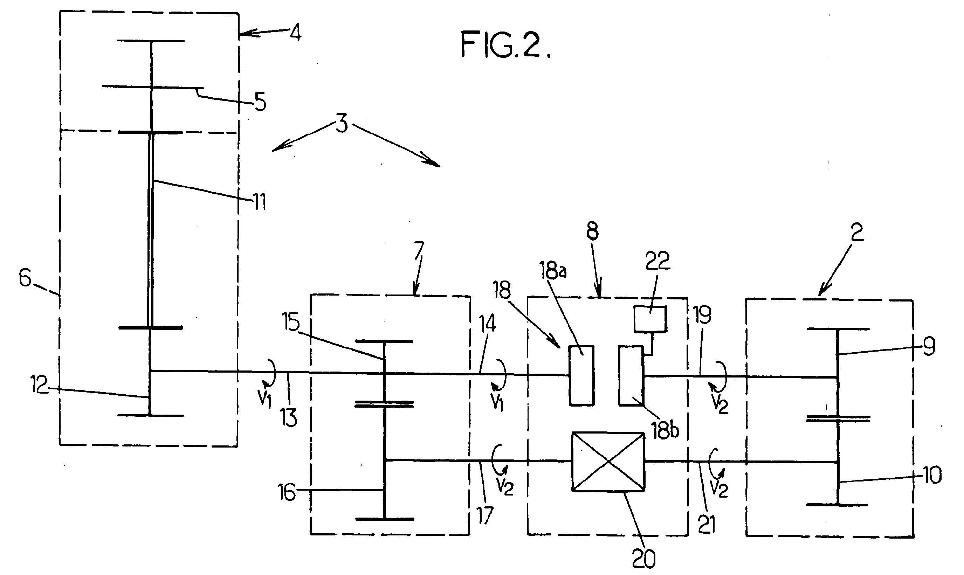

Ces premier et deuxième engrenages 9, 10 représentés schématiquement sur les figures 1 et 2 sont destinés à être entraînés en rotation par le dispositif d'entraînement 3. Lors du fonctionnement du système de pompage, seul l'un des premier et deuxième engrenages 9, 10 est entraîné en rotation par le dispositif d'entraînement et, dans ce cas, l'autre des premier et deuxième engrenage 9, 10 sera alors un engrenage mené qui sera entraîné en rotation par l'engrenage menant de la pompe 2.

L'étage de transmission de puissance 6 du système de pompage a pour fonction de transmettre l'énergie mécanique de l'étage d'approvisionnement en puissance 4, à savoir le vilebrequin 5 dans l'exemple considéré ici, vers l'étage de réduction 7. Cette transmission peut être réalisée par une chaîne 11 qui relie le vilebrequin 5 à une roue réceptrice 12 solidaire d'un arbre d'entrée 13 de l'étage de réduction 7.

Cette chaîne 11 peut également être remplacée par une courroie ou un train d'engrenages de manière à transmettre l'énergie mécanique depuis le vilebrequin 5 vers l'arbre d'entrée 13 de l'étage de réduction 7.

L'étage de réduction 7 comprend également un premier arbre de sortie 14 solidaire en rotation de l'arbre d'entrée 13 qui porte un petit pignon 15. Ce petit pignon 15 lorsqu'il est entraîné en rotation, entraîne un grand pignon 16 qui est lui-même solidaire en rotation d'un deuxième arbre de sortie 17 de l'étage de réduction 7.

En conséquence, lorsque l'arbre d'entrée 13 de l'étage de réduction est entraîné en rotation à une vitesse de rotation V1, le premier arbre de sortie 14 est également entraîné en rotation à la vitesse de rotation V1 tandis que le deuxième arbre de sortie est entraîné en rotation inverse à la vitesse de rotation V2 inférieure à la vitesse de rotation V1.

La fonction de cet étage de réduction 7 est donc de transmettre le couple et la vitesse de rotation V1, V2 respectivement au premier arbre de sortie 14 et au deuxième arbre de sortie 17. La présence du petit pignon 15 et du grand pignon 16 assure par ailleurs un rapport constant entre les vitesses de rotation V1 et V2.

Les moyens sélectifs 8 directement interposés entre l'étage de réduction 7 et la pompe 2 ont, quant à eux, pour fonction d'entraîner la pompe 2 soit par l'intermédiaire du premier engrenage soit par l'intermédiaire du deuxième engrenage, et ce en fonction d'au moins un paramètre moteur prédéterminé qui sera décrit plus en détail dans la suite de la description.

Ces moyens sélectifs 8 pour entraîner la pompe 2 par la mise en rotation du premier engrenage 9 ou du deuxième engrenage 10 comprennent :
- une unité d'accouplement non permanent 18 qui permet d'accoupler ou non le premier arbre de sortie 14 à un premier arbre d'accouplement 19 solidaire en rotation du premier engrenage 9, et
- une roue libre 20 qui relie le deuxième arbre de sortie 17 de l'étage de réduction 7 à un deuxième arbre d'accouplement 21 solidaire en rotation du deuxième engrenage 10 de la pompe 2.

Le principe de fonctionnement de la roue libre 20 est connu en soi et consiste à transmettre le couple et la vitesse de rotation V2 du deuxième arbre de sortie 17 au deuxième arbre d'accouplement 21, lorsque lesdits deuxième arbre de sortie 17 et d'accouplement 21 tournent dans le même sens de rotation et que la vitesse de rotation du deuxième arbre de sortie 17 est supérieure ou égale à la vitesse de rotation du deuxième arbre d'accouplement 21.

L'unité d'accouplement non permanent 18 peut par exemple être réalisé par un accouplement par friction, à savoir un embrayage par friction comprenant deux disques 18a, 18b pourvus de garnitures de friction. Néanmoins cette unité d'accouplement 18 peut également être réalisée au moyen d'un accouplement à manchon conique ou au moyen d'un accouplement à crabots, ou griffes.

Cet accouplement non permanent 18 est commandé par des moyens de commande 22 qui agissent sur l'unité d'accouplement 18 en fonction d'au moins un paramètre moteur prédéterminé.

Ces moyens de commande 22 peuvent notamment comprendre un actionneur qui commande, en fonction dudit au moins paramètre moteur prédéterminé, l'unité d'accouplement 18 pour permettre l'accouplement ou non du premier arbre de sortie 14 de l'étage de réduction 7 avec le premier arbre d'accouplement 19 solidaire en rotation du premier engrenage 9 de la pompe 2. Cet actionneur peut se présenter par exemple sous la forme d'un vérin hydraulique, d'un vérin pneumatique, d'une membrane pneumatique, ou alors sous la forme d'un moteur électrique équipé d'un système avec vis sans fin et coulisseau de manière à permettre l'accouplement ou non des disques 18a, 18b de l'embrayage 18. Cet actionneur peut être piloté par au moins un distributeur qui sera lui-même contrôlé par un calculateur chargé de compiler les paramètres moteurs. Ces paramètres moteurs peuvent par exemple être le régime du moteur, la charge du moteur, l'accélération angulaire du volant moteur, la température des différents organes mécaniques, le débit et/ou la pression d'huile au travers des organes mécanique et éventuellement, lorsque le moteur est embarqué sur un véhicule, des informations sur l'état du véhicule à savoir son déplacement ou son arrêt.

De même, le distributeur destiné à piloter l'actionneur pourra lui-même se présenter sous la forme d'un distributeur de type électropneumatique, électrohydraulique ou électrique.

En remplacement du calculateur, du distributeur et de l'actionneur, les moyens de commande 22 peuvent également se présenter sous la forme d'un unique vérin hydraulique directement commandé par un paramètre moteur prédéterminé, par exemple les variations de pression de l'huile dans le circuit d'huile du moteur.

La description structurelle du système de pompage ayant été faite, une description du fonctionnement du système va maintenant être faite en référence aux figures 1 à 5.

Lorsque le système de pompage se trouve dans configuration conforme à la figure 1, le système de pompage est alors dans un état stable dit grand débit.

Dans cet état de grand débit, et lorsque le moteur est en fonctionnement, le vilebrequin 5 entraîne en rotation la roue réceptrice 12 et donc le premier arbre d'entrée 13 à une vitesse de rotation V1 proportionnelle à la vitesse de rotation du vilebrequin 5. Avec la conception de l'étage de réduction 7, l'arbre de sortie 14 est alors entraîné dans le même sens de rotation que l'arbre d'entrée 13 et également à la même vitesse de rotation V1. A l'inverse, le deuxième arbre de sortie 17 de l'étage de réduction 7 est entraîné dans un sens de rotation inverse et ce à une vitesse de rotation V2 inférieure à la vitesse de rotation V1 du premier arbre de sortie 14. L'unité d'accouplement 18 étant en mode accouplé, le premier arbre d'accouplement 19 est alors également entraîné dans le même sens de rotation que le premier arbre de sortie 14 et à la même vitesse de rotation V1. La pompe 2 est alors activée par la mise en rotation du premier engrenage 9 qui entraîne alors en rotation dans un sens inverse le deuxième engrenage 10 et ce à la vitesse de rotation V1. La vitesse de rotation V1 du deuxième arbre d'accouplement 21 étant alors supérieure à la vitesse de rotation V2 du deuxième arbre de sortie 17, la roue libre 20 autorise alors cette rotation sans qu'il n'existe pour autant de transmission de puissance entre le deuxième arbre de sortie 17 et le deuxième arbre d'accouplement 21.

Dans cet état grand débit du système de pompage, le premier engrenage 9 constitue donc l'engrenage menant tandis que le deuxième engrenage 10 forme alors l'engrenage mené.

La figure 2 représente le système de pompage lorsqu'il se trouve dans un état petit débit, c'est-à-dire lorsque l'unité d'accouplement 18 est dans un mode désaccouplé. Dans ce cas, le premier arbre d'accouplement 19 n'est plus entraîné en rotation par le premier arbre de sortie 14 de l'étage de réduction 7. Dans ce cas, la roue libre 20 permet la transmission de puissance depuis le deuxième arbre de sortie 17 de l'étage de réduction 7 vers le deuxième arbre d'accouplement 21 qui dans ce cas est alors entraîné en rotation à la deuxième vitesse de rotation V2 inférieure à la vitesse de rotation V1. Le deuxième engrenage 10 devient alors l'engrenage menant tandis que le premier engrenage 9 se retrouve alors être l'engrenage mené. Le débit d'huile fourni par la pompe 2 est alors inférieur au débit fourni lorsque le premier engrenage 9 est entraîné en rotation à la première vitesse de rotation V1.

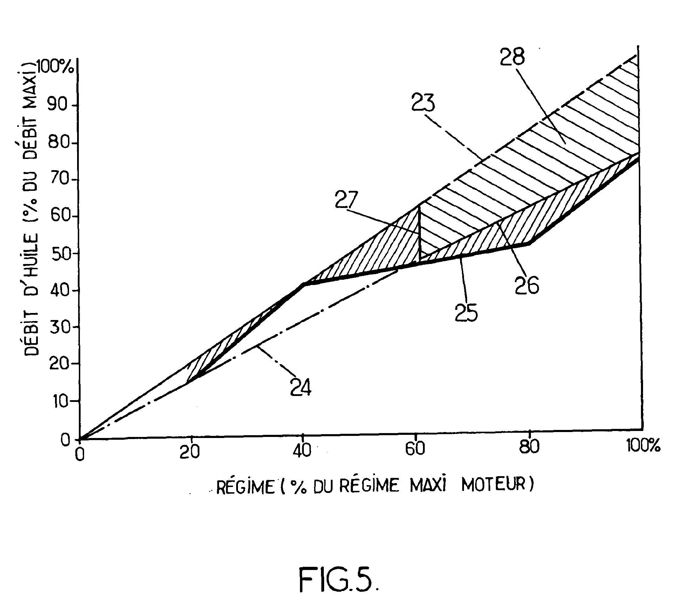

La figure 5 représente un exemple de graphe de la gestion du débit d'huile en fonction du régime du moteur.

Sur la figure 5 :
- la droite en pointillés 23 représente le débit d'huile théorique en sortie de la pompe 2 lorsque le système de pompage se trouve dans l'état dit de grand débit, c'est-à-dire lorsque l'unité d'accouplement 18 est en mode accouplé (voir figure 1) ;
- la droite en trait mixte 24 représente le débit d'huile théorique en sortie de la pompe 2, lorsque le système de pompage se trouve dans l'état dit de petit débit, c'est-à-dire lorsque l'unité d'accouplement 18 est en mode désaccouplé (voir figure 2) ;
- la droite 25 représente le débit d'huile réellement nécessaire au moteur lors de son fonctionnement, et
- la droite 26 représente le débit d'huile délivré par le système de pompage conforme à l'invention.

Ainsi comme on peut le voir sur la figure 5, si la pompe 2 était uniquement activée par la mise en rotation de son premier engrenage 9 selon le premier rapport de vitesse avec une vitesse de rotation V1 proportionnelle au régime moteur, le débit d'huile délivré par la pompe 2 serait alors représenté par la droite 23. L'aire située entre la droite 23 et la courbe 25 représenterait alors la totalité du débit d'huile fournie par la pompe 2 mais non utilisée par le moteur ou l'environnement moteur, cette quantité d'huile devant être alors refoulée depuis le côté aval de la pompe vers son côté amont.

Néanmoins, avec le système de pompage conforme à l'invention et comme on peut le voir sur la figure 5, lorsque le débit d'huile fourni par la pompe 2 présente une valeur nettement supérieure au débit d'huile utilisé par le moteur, les moyens de commande 22 peuvent alors désaccoupler l'unité d'accouplement 18 de manière à activer la pompe 2 par l'entraînement en rotation du deuxième engrenage 10 selon le deuxième rapport de vitesse avec une vitesse de rotation V2 toujours proportionnelle au régime moteur mais inférieure à la vitesse de rotation V1. Ce désaccouplement de l'unité d'accouplement 18 qui permet le passage de la pompe de la position grand débit à la position petit débit est représenté par la portion verticale 27 de la courbe 26 représenté sur la figure 5. En conséquence, l'aire 28 située entre la droite 23 et la courbe 26 représente le débit d'huile qui n'est plus fourni par la pompe 2 au moteur en économisant donc de manière relativement importante l'énergie fourni à la pompe 2.

Néanmoins, lorsque le débit d'huile fourni par la pompe 2 n'est pas utilisé par le moteur, cette quantité sera refoulée vers le canal d'aspiration 2a de la pompe 2 via un clapet de décharge. La figure 4 représente un tel clapet de décharge 29 disposé en aval de la pompe 2 et plus exactement au niveau de son canal de refoulement 2b. Ce clapet de décharge 29 peut notamment comprendre un obturateur 30 destiné à obturer un canal de dérivation 31 qui relie le canal de refoulement 2b au canal d'aspiration 2a de la pompe 2. Cet obturateur 30 est sollicité élastiquement par un ressort 32 dont la raideur est déterminée de telle sorte que, lorsque la pression régnant dans le canal de refoulement 2b dépasse une valeur de seuil, l'obturateur 32 est déplacé à l'encontre de l'effort exercé par le ressort 32 de telle sorte que le canal de refoulement 2b est mis en communication avec le canal de dérivation 31. Dès lors, le surplus de débit d'huile en aval de la pompe est dérivé en amont de la pompe, c'est-à-dire vers le canal d'alimentation 2a.

La position de l'obturateur 32 peut également être détectée de manière à participer à la commande de l'activation des moyens de commande 22 de manière à désaccoupler l'unité d'accouplement 18 lorsque par exemple la pression régnant dans le canal de refoulement 2b est trop importante, c'est-à-dire lorsque l'obturateur 30 a été déplacé à l'encontre de l'effort exercé par le ressort 32.

Par ailleurs, les moyens de commande 22 peuvent également commander le passage de la configuration petit débit à la configuration grand débit de la pompe en fonction des mêmes paramètres moteur précédemment évoqués, à savoir, la pression d'huile, la température de l'huile, le débit d'huile, le régime moteur et/ou la charge du moteur.

De même, lorsque le moteur est en fonctionnement, la configuration grand débit de la pompe 2 peut être enclenchée lorsque un ou plusieurs autres organes mécaniques sont actionnés à leur tour ou vont être actionnés, tels que par exemple lors de l'ouverture des pissettes de refroidissement des pistons ou lors de l'alimentation en huile du variateur de calage de distribution.

Bien entendu, la gestion de l'accouplement de l'unité d'accouplement 18 peut varier suivant la gestion voulue par l'utilisateur. A titre d'exemple, la gestion de l'accouplement peut être continue et s'effectuer de manière instantanée. A chaque instant, en compilant les informations moteur telles que la pression d'huile, la température d'huile, le débit d'huile, le régime moteur et/ou la charge du moteur par exemple, le calculateur des moyens de commande 22 peut alors estimer par lequel des premier et deuxième engrenages 9, 10 la pompe doit être activée pour assurer les conditions de lubrification optimales du moteur en fonction des conditions de fonctionnement de ce dernier.

## Revendications

1. Système de pompage d'huile de lubrification, notamment pour moteur à combustion interne, comprenant :
- une pompe (2) comportant au moins des premier et deuxième engrenages (9,10) adaptés pour tourner dans un corps de pompe (2c), et
- un dispositif d'entraînement (3) apte à entraîner en rotation le premier engrenage (9) de la pompe (2) à une vitesse de rotation (V1) proportionnelle au régime du moteur selon un premier rapport de vitesse constant,
**caractérisé en ce que** le dispositif d'entraînement (3) est en outre apte à entraîner en rotation le deuxième engrenage (10) de la pompe (2) à une vitesse de rotation (V2) proportionnelle au régime du moteur selon un deuxième rapport de vitesse, **et en ce que** le dispositif d'entraînement (3) comprend des moyens sélectifs (8) pour entraîner la pompe (2) par le premier engrenage (9) ou par le deuxième engrenage (10) en fonction d'au moins un paramètre moteur prédéterminé.

2. Système de pompage selon la revendication 1, dans lequel le dispositif d'entraînement (3) est adapté pour relier les premier et deuxième engrenages (9, 10) de la pompe (2) à un même élément tournant (5) destiné à être entraîné en rotation par le moteur.

3. Système selon la revendication 2, dans lequel le dispositif d'entraînement (3) comprend un étage de réduction (7) présentant un arbre d'entrée (13) destiné à être entraîné en rotation par l'élément tournant (5) et des premier et deuxième arbres de sortie (14, 17) entraînés en rotation selon respectivement les premier et deuxième rapport de vitesse, et les moyens sélectifs (8) sont aptes à relier, d'une part, le premier arbre de sortie (14) avec le premier engrenage (9) de la pompe, et d'autre part, le deuxième arbre de sortie (17) avec le deuxième engrenage (10) de ladite pompe.

4. Système selon l'une quelconque des revendications précédentes, dans lequel le deuxième rapport de vitesse est inférieur au premier rapport de vitesse.

5. Système selon la revendication 4, dans lequel les moyens sélectifs (8) comprennent :
- une unité d'accouplement non permanent (18) qui permet d'accoupler ou non le premier engrenage (9) de la pompe (2) avec le premier arbre de sortie (14) de l'étage de réduction (7), et
- une roue libre (20) qui relie mécaniquement le deuxième engrenage (10) de la pompe (2) et le deuxième arbre de sortie (17) de l'étage de réduction (7).

6. Système selon la revendication 5, dans lequel l'unité d'accouplement non permanent (18) est commandé par des moyens de commande (22) en fonction dudit au moins un paramètre moteur prédéterminé.

7. Système selon la revendication 6, dans lequel les moyens de commande (22) comprennent un actionneur qui commande, en fonction dudit au moins un paramètre moteur prédéterminé, l'unité d'accouplement (18) pour permettre l'accouplement ou non du premier arbre de sortie (14) de l'étage réducteur (7) avec le premier engrenage (9) de la pompe (2).

8. Système selon la revendication 3, dans lequel le dispositif d'entraînement (3) comprend en outre un étage de transmission de puissance (6) qui est destiné à relier l'arbre d'entrée (13) de l'étage de réduction (7) à l'élément tournant (5) du moteur.

9. Système selon l'une quelconque des revendications précédentes, dans lequel ledit au moins un paramètre moteur prédéterminé est compris parmi la pression d'huile en aval de la pompe, la température de l'huile, le débit d'huile en aval de la pompe, le régime moteur et la charge du moteur.
